# EUROPEAN PATENT APPLICATION

(11) **EP 2 620 835 A1**
(43) Date of publication of application: **31.07.2013**
(21) Application number: 12152534.9
(22) Date of filing: 25.01.2012
(51) Int. Cl.: G06F 1/16

(54) **Electronic device and method of facilitating input at the electronic device**

(71) Applicant: Research In Motion Limited, Waterloo, ON N2L 3W8 (CA)
(72) Inventor: Ladouceur, Norman Miner, Wingham Ontario N0G 2W0 (CA); Griffin, Jason Tyler, Waterloo Ontario N2L 3W8 (CA); Fyke, Steven Henry, Waterloo, Ontario N2L 3W8 (CA)
(74) Representative: Moore, Barry

(57) **Abstract**

An electronic device includes a first housing component coupled to a second housing component, a first touch-sensitive display mounted in the first housing component, the first touch-sensitive display in electrical communication with a processor, and a second touch-sensitive display mounted in the second housing component, the second touch-sensitive display in electrical communication with the processor, wherein the second housing component is movable to a second position in which the second housing component is stacked above the first housing component and a gap is provided between the first touch-sensitive display and the second touch-sensitive display.

## Description

### FIELD OF TECHNOLOGY

The present disclosure relates to electronic devices including touch-sensitive displays and methods for inputting information to the touch-sensitive displays.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. A touch-sensitive display, also known as a touchscreen display, is particularly useful on handheld devices, which are small and have limited space for user input and output. The information displayed on the touch-sensitive displays may be modified depending on the functions and operations being performed.

### SUMMARY

In an aspect of the present disclosure there is provided an electronic device including: a first housing component coupled to a second housing component; a first touch-sensitive display mounted in the first housing component, the first touch-sensitive display in electrical communication with a processor; and a second touch-sensitive display mounted in the second housing component, the second touch-sensitive display in electrical communication with the processor; wherein the second housing component is movable to a second position in which the second housing component is stacked above the first housing component and a gap is provided between the first touch-sensitive display and the second touch-sensitive display.

In another aspect of the present disclosure there is provided a method including: displaying a virtual input device on a first touch-sensitive display of an electronic device; receiving, at a processor, a signal indicating that a second touch-sensitive display of the electronic device is in a position stacked above the first touch-sensitive display; and in response to receiving the indication, displaying a visual representation of the virtual input device on the second touch-sensitive display.

### BRIEF DESCRIPTION OF THE DRAWINGS

Embodiments of the present disclosure will now be described, by way of example only, with reference to the attached figures, wherein:

FIG. 1 is a simplified block diagram of one example of a portable electronic device in accordance with the present disclosure;

FIG. 2 is an isometric front view of an example portable electronic device;

FIG. 3A is a side view of the portable electronic device of FIG. 2 in a first position;

FIG. 3B is a side view of the portable electronic device of FIG. 2 in a second position;

FIG. 4A is an isometric front view of the portable electronic device of FIG. 2 including a transparent display in the second position;

FIG. 4B is an isometric front view of another example portable electronic device including an opaque display in the second position;

FIG. 5 is a flow chart illustrating a method of facilitating input at the portable electronic device, in accordance with the disclosure;

FIG. 6 is a front view of the example portable electronic device of FIG. 2 including a transparent display in the second position;

FIG. 7 is a front view of the example portable electronic device of FIG. 4B including an opaque display in the second position; and

FIG. 8 is an isometric view of another example portable electronic device.

### DETAILED DESCRIPTION

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device. The electronic device may alternatively be larger than a handheld device and not intended to be portable when in use.

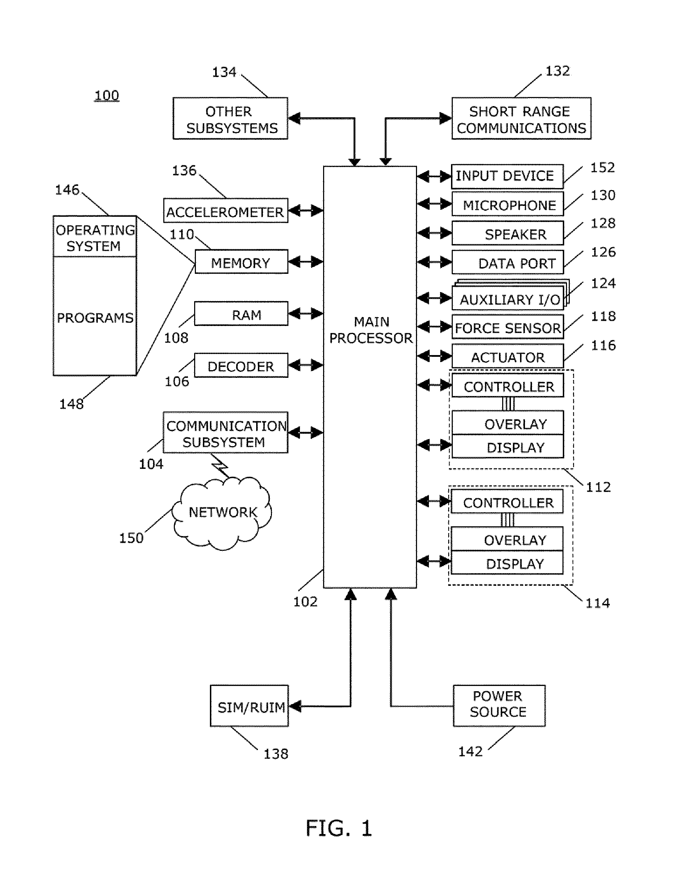

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, an auxiliary input/output (I/O) subsystem 124, a data port 126, a speaker 128, a microphone 130, short-range communications 132, and other device subsystems 134. The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The processor 102 further interacts with a first touch-sensitive display 112 and a second touch-sensitive display 114. Both the first and second touch-sensitive displays include displays having touch-sensitive overlays operably connected to electronic controllers. Alternatively, the touch-sensitive displays 112, 114 may interact with two different processors.

The processor 102 may optionally interact with one or more actuators 116 to provide tactile feedback and one or more force sensors 118 to detect forces imparted on the touch-sensitive displays 112, 114. Interaction with a graphical user interface is performed through the touch-sensitive overlays. The processor 102 interacts with the touch-sensitive overlays via the electronic controllers. Information, such as text, characters, symbols, images, icons, and other items that may be displayed or rendered on a portable electronic device, is displayed on the touch-sensitive displays 112, 114 via the processor 102. The processor 102 may interact with an orientation sensor such as an accelerometer 136 that may be utilized to detect direction of gravitational forces or gravity-induced reaction forces.

The touch-sensitive displays 112, 114 may be any suitable touch-sensitive displays, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay. The overlay may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO). The touch-sensitive displays 112, 114 may be the same type of touch-sensitive displays or may be different types of touch-sensitive displays.

One or more touches, also known as touch contacts or touch events, may be detected by the touch-sensitive displays 112, 114. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 112, 114. For example, the x location component may be determined by a signal generated from one touch sensor, and the y location component may be determined by a signal generated from another touch sensor. A signal is provided to the controller in response to detection of a touch. A touch may be detected from any suitable object, such as a finger, thumb, appendage, or other items, for example, a stylus, pen, or other pointer, depending on the nature of the touch-sensitive display 112, 114. Multiple simultaneous touches may be detected.

The touch-sensitive displays 112, 114 are also configured to detect a gesture. A gesture, such as a swipe, is a type of touch that begins at an origin point and continues to a finishing point while touch contact is maintained. A swipe may be long or short in distance, or duration, or both distance and duration. Two points of the swipe may be utilized to determine a vector that describes a direction of the swipe. The direction may be referenced with respect to the touch-sensitive display 112, 114, the orientation of the information displayed on the touch-sensitive display 112, 114, or another reference. For the purposes of providing a reference, "horizontal" as utilized herein is substantially left-to-right or right-to-left, in an x-direction, relative to the orientation of the displayed information, and "vertical" as utilized herein is substantially upward or downward relative, in a y-direction, to the orientation of the displayed information. The origin point and the finishing point of the swipe may be utilized to determine the magnitude or distance of the swipe. The duration of the swipe may be determined from the origin point and finishing point of the swipe in time. The processor 102 receives data from the controller to determine the direction, magnitude, and duration of the swipe. The gesture may be tracked and a plurality of sub-vectors determined for each gesture. The final sub-vector may be utilized to determine a distance and duration of a final portion of the gesture. The processor 102 receives data from the controller to determine the speed of the swipe based on the distance and duration of the final portion of the gesture.

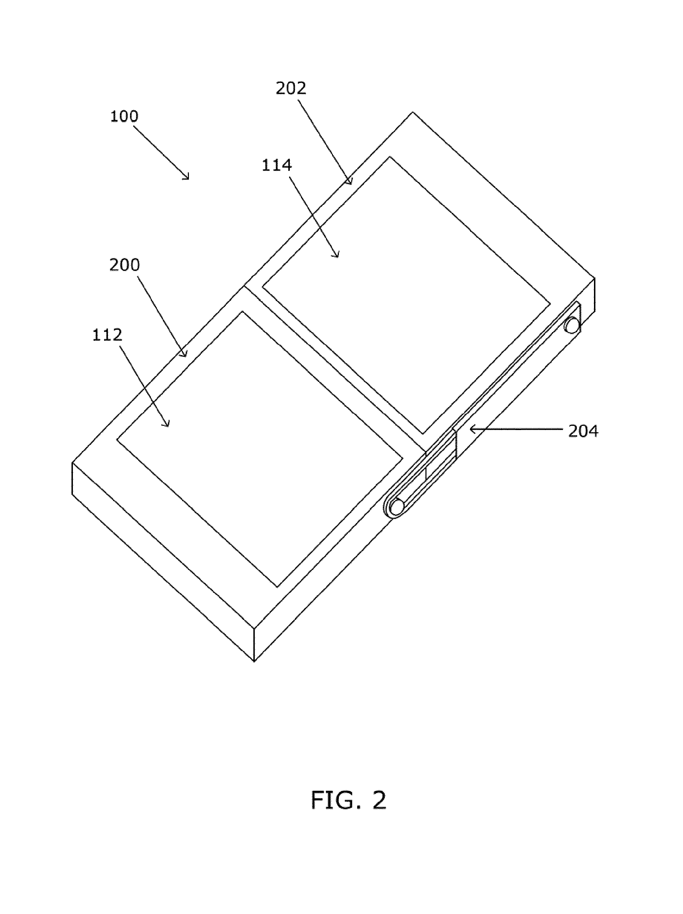

An example of a portable electronic device 100 is shown in FIG. 2. The portable electronic device 100 includes a first housing component 200 that is coupled to a second housing component 202 by a pair of connecting arms 204, one of which is shown in FIG. 2. The housing components 200, 202 house the internal components that are shown in FIG. 1 and frame the first and second touch-sensitive displays 112, 114, respectively, such that outer surfaces of the touch-sensitive displays 112, 114 are exposed for user-interaction when the portable electronic device 100 is in use.

The processor 102 and other internal components of FIG. 1 may be located in one of the first housing component 200 and the second housing component 202. Wiring may extend through one or both of the connecting arms 204 to allow for electrical communication between the components 200, 202. Alternatively, each of the housing components 200, 202 may include a processor and other internal components of FIG. 1 and the first housing component 200 and the second housing component 202 may communicate wirelessly.

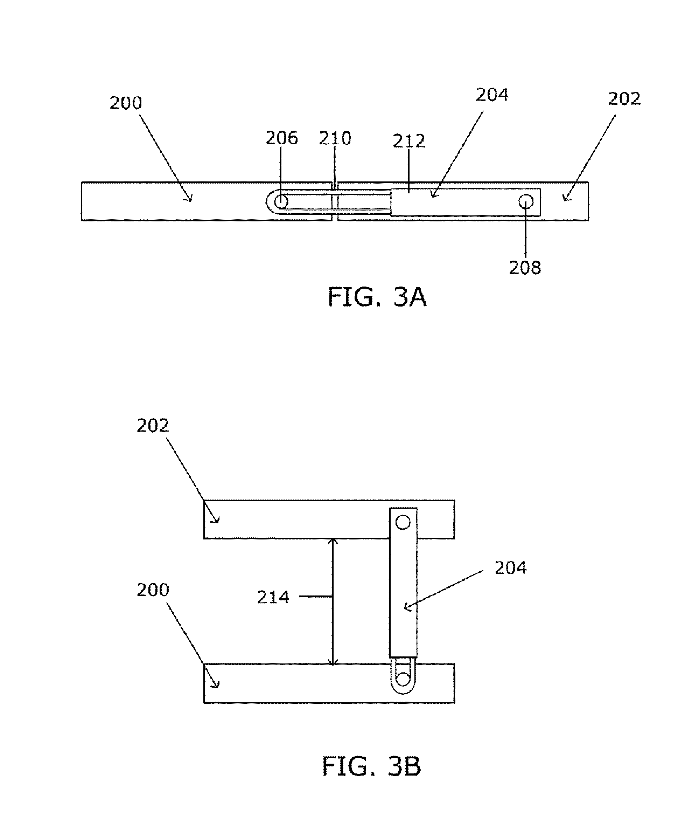

Referring also to FIGS. 3A and 3B, the connecting arms 204 include retractable portions 210 that are slidably received in support portions 212 of the connecting arms 204. The retractable portions 210 are coupled to first pins 206, which extend from the first housing component 200, and the support portions 210 are coupled to second pins 208, which extend from the second housing component 204. The retractable portions 210 are rotatable about the first pins 206 and the support portions 212 are rotatable about the second pins 208. As the retractable portions 210 and support portions 212 rotate about the pins 206, 208, the retractable portions 210 may slide into the support portions 212 to reduce the gap between the first housing component 200 and the second housing component 202. The connecting arms 204 are one example arrangement for coupling the first housing component 200 and the second housing component 202 to one another. Other types of connecting arrangements are also possible, such as a single connecting arm 204, for example.

The portable electronic device 100 is movable from a first position, in which the first housing component 200 and the second housing component 202 are adjacent to one another, and a second position, in which the second housing component 202 is stacked above the first housing component 200, with the first housing component and the second housing component being substantially parallel to each other, although such a configuration is not required. In the second position, the first housing component 200 and the second housing component 202 are separated by a gap 214, as shown in FIG. 3B. The gap 214 is generally sized to allow a user to comfortably interact with the first touch-sensitive display 112 when the second touch-sensitive display 114 is stacked above the first touch-sensitive display 112.

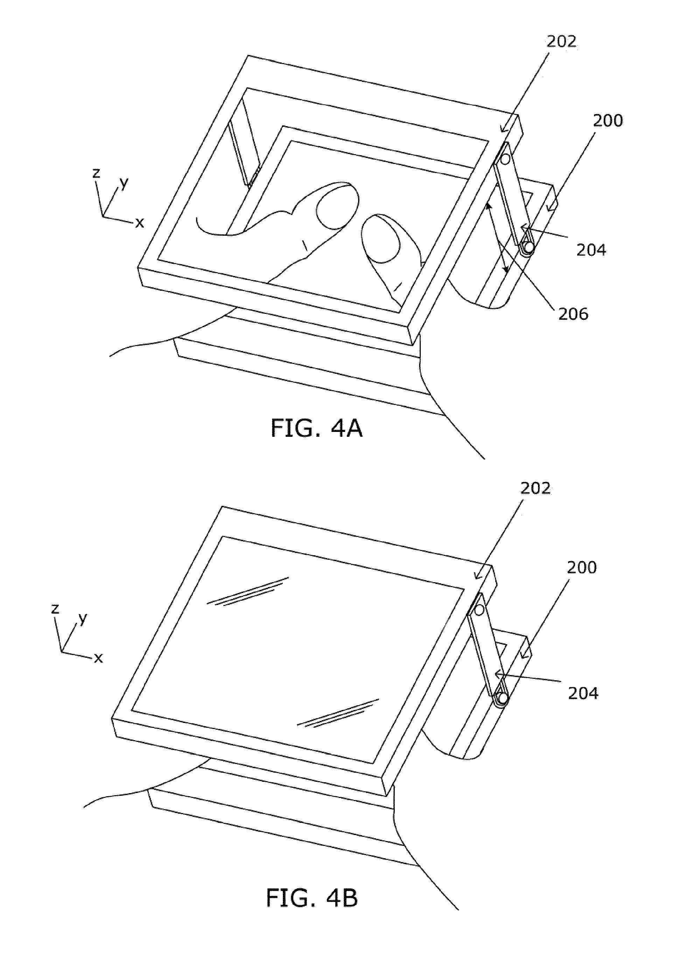

The second touch sensitive display 114 may be transparent, as shown in FIG. 4A, or may be opaque, as shown in FIG. 4B. In the first position, the first touch-sensitive display 112 and the second touch-sensitive display 114 of portable electronic device 100 may operate as a single continuous display.

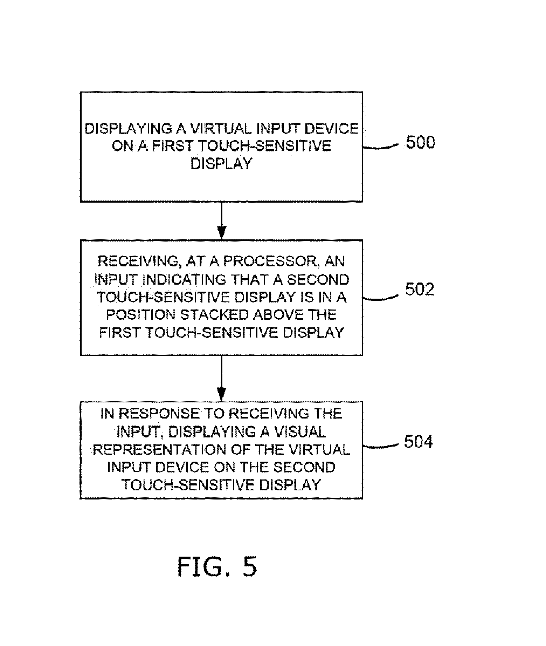

FIG. 5 is a flowchart illustrating an example method of facilitating input at an electronic device. The method may be carried out by software executed by, for example, the processor 102. Coding of software for carrying out such a method is within the scope of a person of ordinary skill in the art given the present description. The method may contain additional or fewer processes than shown and described, and may be performed in a different order. Computer-readable code executable by, for example, the processor 102 of the portable electronic device 100 to perform the method, may be stored in a computer-readable medium.

A virtual input device is displayed, at 500, on the first touch-sensitive display 112 of the portable electronic device 100. The virtual input device may be one or more virtual buttons, a virtual keyboard or other displayed images, for example. When the second touch-sensitive display 114 is in a position stacked above the first touch-sensitive display 112, the processor 102 receives, at 502, an input indicating same. In response, a visual representation of the virtual input device is displayed on the second touch-sensitive display 114, at 504.

The input indicating that the second touch-sensitive display 114 is in a position stacked above the first touch-sensitive display 112 may be received from an encoder located in the connecting arrangement, Hall Effect sensors or another sensing device as will be understood by a person skilled in the art.

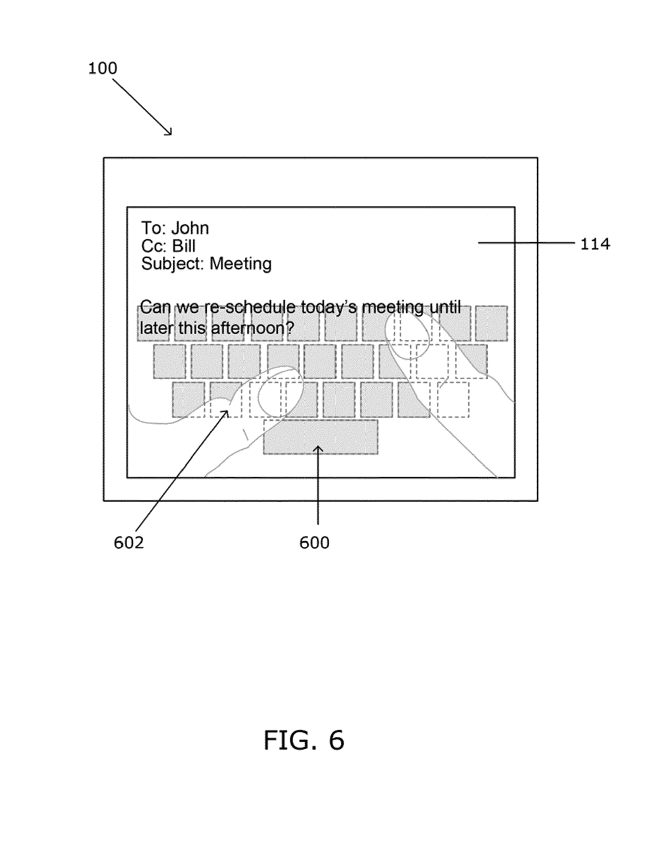

Continued reference is made to FIG. 5 with additional reference to FIG. 6 to describe one example of a method of facilitating input at the portable electronic device 100. As shown, the second touch-sensitive display 114 of the portable electronic device 100 is transparent. In the present example, a user is composing an e-mail message. A virtual keyboard 600 is displayed, at 500, on the first touch-sensitive display 112 of the portable electronic device 100. When the second touch-sensitive display 114 is in a position stacked above the first touch-sensitive display 112, as shown in FIG. 6, the processor 102 receives an input and, in response, a visual representation 602 of the virtual keyboard 600 is displayed on the second touch-sensitive display 114, at 504. The virtual keyboard 602 is indicated by dashed lines, as shown.

As shown in FIG. 6, when an email message is composed, for example, touches are received at the virtual keyboard 600 on the first-touch sensitive display 112 and the corresponding text is displayed on the second touch-sensitive display 114. The method described herein facilitates user input because the user is able to position his or her thumbs based on the visual representation 602 of the virtual keyboard 600 that is displayed on the second touch-sensitive display 114. During user input, the visual representation 602 of the virtual keyboard 600 that is displayed on the second touch-sensitive display 114 is not obscured by the selector, which is the user's thumbs in this example, so the likelihood of selecting the correct key of the virtual keyboard 600 is increased.

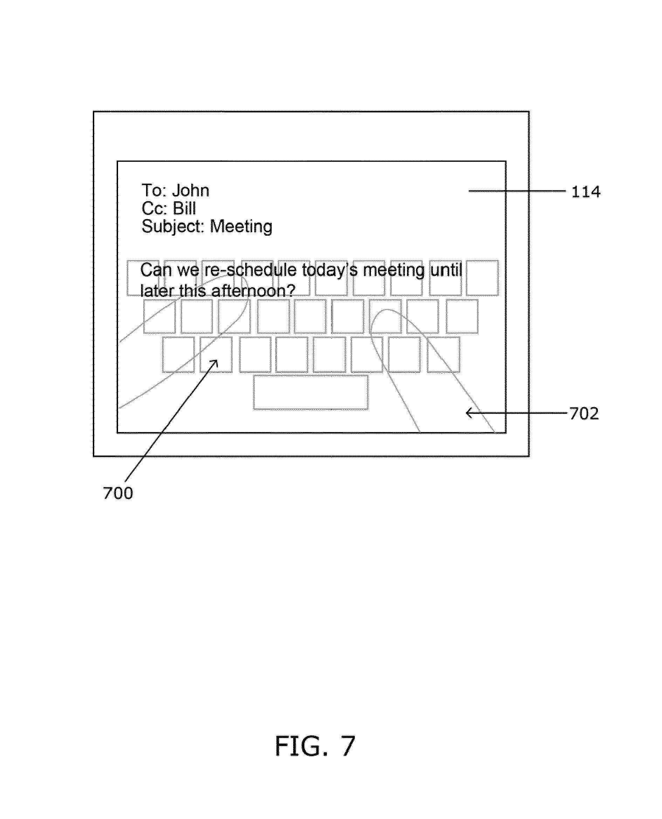

Continued reference is made to FIG. 5 with additional reference to FIG. 7 to describe another example of a method of facilitating input at the portable electronic device 100. The second touch-sensitive display 114 of the portable electronic device 100 in this example is opaque. A virtual keyboard, which is obscured by the second touch-sensitive display 114 is displayed, at 500, on the first touch-sensitive display 112 of the portable electronic device 100. When the second touch-sensitive display 114 is in a position stacked above the first touch-sensitive display 112, as shown in FIG. 7, the processor 102 receives an input and, in response, a visual representation 700 of the virtual keyboard is displayed on the second touch-sensitive display 114, at 504.

As shown in FIG. 7, when an email message is composed, for example, touches are received at the virtual keyboard 600 on the first-touch sensitive display 112 and the corresponding text is displayed on the second touch-sensitive display 114. The method described herein facilitates user input because the user is able to position his or her thumbs based on the visual representation 602 of the virtual keyboard 600 that is displayed on the second touch-sensitive display 114. Because the second touch-sensitive display 114 is opaque, a visual representation of a selector 702, which is the user's thumbs in this example, is also displayed, as shown. The visual representation of the selector 702 is an outline of the user's thumbs that does not obscure the keys of the virtual keyboard 600. During user input, the visual representation 602 of the virtual keyboard 600 and selector 702 is used as a guide by the user to increase the likelihood of selecting the correct key on the virtual keyboard 600.

The selector may be any user appendage. Alternatively, the selector may be a stylus when the first touch-sensitive display 112 is capable of interacting with a stylus.

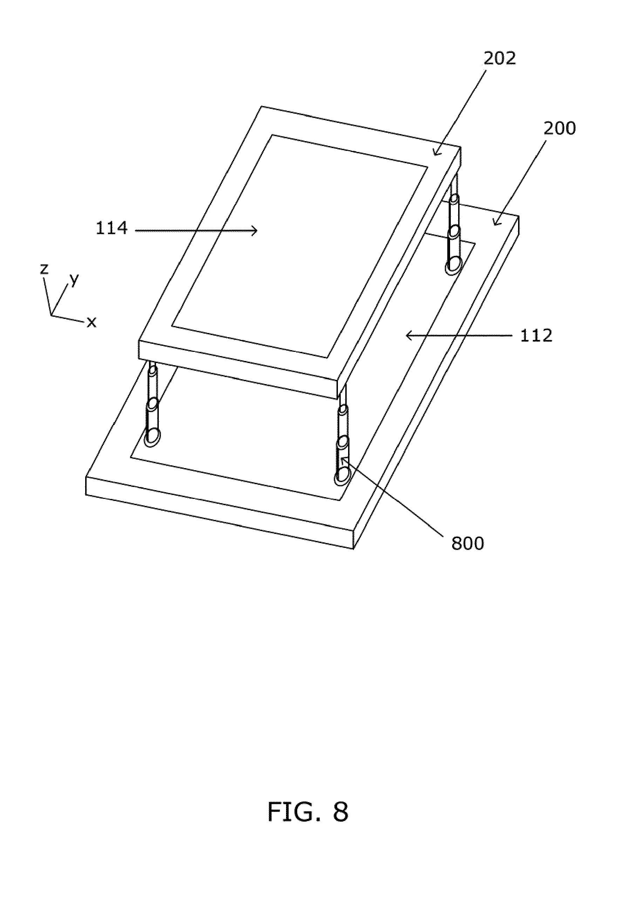

Referring to FIG. 8, another embodiment of a portable electronic device 100 is generally shown. In this embodiment, the second touch-sensitive display 114 is in a position stacked above the first touch-sensitive display 112 and coupled thereto by one or more "pop-up" mechanisms. The "pop-up" mechanisms of FIG. 8 are concentric cylinder assemblies 800 located generally at the four corners of the touch-sensitive displays 112, 114. The concentric cylinder assemblies 800 are extendable in response to user actuation of a release button (not shown). A locking mechanism (not shown) maintains the concentric cylinder assemblies 800 in an extended position. Other "pop-up" mechanisms are possible, as will be appreciated by a person skilled in the art. In addition, the pop-up mechanisms may be spring-loaded to bias the second touch-sensitive display 114 toward the stacked position when a catch is released, for example. In the stowed position, the second housing component 202 may rest on top of the first housing component 200. Alternatively, the first touch-sensitive display 112 may be recessed into the first housing component 200 to provide a cavity for receiving the second housing component 202 so that the second touch-sensitive display 114 may be generally flush with a front surface of the first housing component 200 when stowed.

In another embodiment, the output displayed on the first touch-sensitive display 112 and the second touch-sensitive display 114 may be customized based on a viewing angle of a user. The viewing angle may be determined using at least one camera in communication with eye-tracking software, which may be stored in memory and executed by the processor 102. Based on the viewing angle, displayed information may be located at an appropriate location on the first touch-sensitive display 112 and/or the second touch-sensitive display 114 in order to improve the user's ability to view the displayed information. Eye-tracking software is known in the art and, therefore, will not be described further here.

In another embodiment, a location of the selector above the first touch-sensitive display 112 may be determined when both the first touch-sensitive display 112 and the second touch-sensitive display 114 are capacitive touch-sensitive displays. Because a size of the gap between the first touch-sensitive display 112 and the second touch-sensitive display 114 is known when the portable electronic device is in the stacked position, accuracy of locating a selector in a z-axis direction above the first touch-sensitive display 112 is improved. The location of the selector may be determined by comparing the signals received by each capacitive touch-sensitive display. The signals are not linear and may be influenced by the size and type of the selector, for example, as well as other factors. When the signal exceeds a threshold for achieving a touch at one of the displays, the selector is determined to be in contact with one of the displays. When a signal at the bottom capacitive touch-sensitive display and a signal at the top capacitive touch-sensitive display are generally identical, the selector is determined to be mid-way between the capacitive touch-sensitive displays. Similarly, a signal at the top capacitive touch-sensitive display that is larger than a signal at the bottom capacitive touch-sensitive display indicates that the selector is closer to the top capacitive touch-sensitive display than the bottom capacitive touch-sensitive display. The actual location may be estimated by dividing the known gap size based on a ratio of the signals.

The location of the selector in the z-axis direction may be used to increase a number of gestures available to a user, which may increase the overall efficiency of operating the portable electronic device 100. Further, the information may be used to modify displayed information. For example, virtual buttons displayed on one or both of the touch-sensitive displays 112, 114 may be increased in size when a z distance between the selector and the touch-sensitive display 112 decreases.

One or more advantages may be realized by the electronic device and methods described herein. By allowing the user to see a visual representation of the input device that is unobscured by the selector, input errors may be reduced and overall input efficiency may be improved.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. An electronic device (100) comprising:
a first housing component (200) coupled to a second housing component (202);
a first touch-sensitive display (112) mounted in the first housing component (200), the first touch-sensitive display (112) in electrical communication with a processor (102); and
a second touch-sensitive display (114) mounted in the second housing component (202), the second touch-sensitive display (114) in electrical communication with the processor (102);
wherein the second housing component (202) is movable to a second position in which the second housing component (202) is stacked above the first housing component (200) and a gap (206) is provided between the first touch-sensitive display (112) and the second touch-sensitive display (114).

2. An electronic device (100) as claimed in claim 1, wherein the second touch-sensitive display (114) is a transparent touch-sensitive display.

3. An electronic device (100) as claimed in claim 2, wherein when the electronic device (100) is in the second position and the first touch-sensitive display (112) displays an input device (600), the second touch-sensitive display (114) displays a visual representation of the input device (602).

4. An electronic device (100) as claimed in claim 1, wherein the second touch-sensitive display (114) is an opaque touch-sensitive display.

5. An electronic device (100) as claimed in claim 4, wherein when the electronic device (100) is in the second position and the first touch-sensitive display (112) displays an input device, the second touch-sensitive display (114) displays a visual representation (700) of the input device and a virtual representation of a selector (702) for interacting with the input device (600).

6. An electronic device (100) as claimed in any preceding claim, comprising a connecting arm (204) coupling the second touch-sensitive display (114) to the first touch-sensitive display (112), the connecting arm (204) being movable from a first position in which the second touch-sensitive display (114) and the first touch-sensitive display (112) are adjacent to one another and the second position.

7. An electronic device (100) as claimed in any preceding claim, wherein the electronic device (100) is a portable electronic device that is sized to be handheld.

8. An electronic device (100) as claimed in any preceding claim, wherein the input device is a virtual keyboard (600) or a virtual button.

9. An electronic device (100) as claimed in any preceding claim, wherein a location at which the input device is displayed on the second touch-sensitive display (114) is determined based on a viewing angle.

10. An electronic device (100) as claimed in any preceding claim, wherein the first touch-sensitive display (112) and the second touch-sensitive display (114) are capacitive touch-sensitive displays and a location of a selector in a z-direction above the first touch-sensitive display (112) when the second housing component (202) is stacked above the first housing component (200) is determined by comparing signals received at the first touch-sensitive display (112) and the second touch-sensitive display (114).

11. A method comprising:
displaying a virtual input device on a first touch-sensitive display (112) of an electronic device (100);
receiving, at a processor (102), a signal indicating that a second touch-sensitive display (114) of the electronic device (100) is in a position stacked above the first touch-sensitive display (112); and
in response to receiving the indication, displaying a visual representation (602) of the virtual input device on the second touch-sensitive display (114).

12. A method as claimed in claim 11, comprising receiving, at a processor (102), an input comprising a z-distance and modifying displayed information based on the z-distance.

13. A method as claimed in claim 11 or 12, wherein a location of the visual representation (602) of the virtual input device on the second touch-sensitive display (114) is determined based on a viewing angle.

14. A method as claimed in any one of claims 11 to 13, wherein the second touch-sensitive display (114) is a transparent touch-sensitive display.

15. A method as claimed in any one of claims 11 to 14, wherein the second touch-sensitive display (114) is an opaque touch-sensitive display.

## Amended claims

### Amended claims in accordance with Rule 137(2) EPC.

**1.** An electronic device (100) comprising:
a first housing component (200) coupled to a second housing component (202);
a first touch-sensitive display (112) mounted in the first housing component (200), the first touch-sensitive display (112) in electrical communication with a processor (102); and
a second touch-sensitive display (114) mounted in the second housing component (202), the second touch-sensitive display (114) in electrical communication with the processor (102);
wherein the second housing component (202) is movable from a first position to a second position in which the second housing component (202) is stacked above the first housing component (200) and a gap (214) is provided between the first housing component (200) and the second housing component (202) to facilitate input on the first touch-sensitive display (112) when the second housing component (202) is in the second position.

**2.** An electronic device (100) as claimed in claim 1, wherein the second touch-sensitive display (114) is a transparent touch-sensitive display.

**3.** An electronic device (100) as claimed in claim 2, wherein when the electronic device (100) is in the second position and the first touch-sensitive display (112) displays an input device (600), the second touch-sensitive display (114) displays a visual representation of the input device (602).

**4.** An electronic device (100) as claimed in claim 1, wherein the second touch-sensitive display (114) is an opaque touch-sensitive display.

**5.** An electronic device (100) as claimed in claim 4, wherein when the electronic device (100) is in the second position and the first touch-sensitive display (112) displays an input device, the second touch-sensitive display (114) displays a visual representation (700) of the input device and a virtual representation of a selector (702) for interacting with the input device (600).

**6.** An electronic device (100) as claimed 1, comprising a connecting arm (204) coupling the second touch-sensitive display (114) to the first touch-sensitive display (112), the connecting arm (204) being movable from the first position in which the second touch-sensitive display (114) and the first touch-sensitive display (112) are adjacent to one another and the second position.

**7.** An electronic device (100) as claimed in claim 1, wherein the electronic device (100) is a portable electronic device that is sized to be handheld.

**8.** An electronic device (100) as claimed in claim 1, wherein the input device is a virtual keyboard (600) or a virtual button.

**9.** An electronic device (100) as claimed in claim 1, wherein a location at which the input device is displayed on the second touch-sensitive display (114) is determined based on a viewing angle.

**10.** An electronic device (100) as claimed in claim 1, wherein the first touch-sensitive display (112) and the second touch-sensitive display (114) are capacitive touch-sensitive displays and a location of a selector in a z-direction above the first touch-sensitive display (112) when the second housing component (202) is stacked above the first housing component (200) is determined by comparing signals received at the first touch-sensitive display (112) and the second touch-sensitive display (114).

**11.** A method comprising:
displaying a virtual input device on a first touch-sensitive display (112) of an electronic device (100);
receiving, at a processor (102), a signal indicating that a second touch-sensitive display (114) of the electronic device (100) is in a position stacked above a first housing component (200) including the first touch-sensitive display (112) and a gap (214) is provided between the first housing component (200) and a second housing component (202) including the second touch-sensitive display (114) to facilitate input on the first touch-sensitive display (112) when the second touch-sensitive display (114) is in the stacked position; and
in response to receiving the indication, displaying a visual representation (602) of the virtual input device on the second touch-sensitive display (114).

**12.** A method as claimed in claim 11, comprising receiving, at a processor (102), an input comprising a z-distance and modifying displayed information based on the z-distance.

**13.** A method as claimed in claim 11, wherein a location of the visual representation (602) of the virtual input device on the second touch-sensitive display (114) is determined based on a viewing angle.

**14.** A method as claimed in claim 11, wherein the second touch-sensitive display (114) is a transparent touch-sensitive display.

**15.** A method as claimed in claim 11, wherein the second touch-sensitive display (114) is an opaque touch-sensitive display.
